# EUROPEAN PATENT SPECIFICATION

(11) **EP 2 279 931 B1**
(45) Date of publication and mention of the grant of the patent: **15.01.2014**
(21) Application number: 09425301.0
(22) Date of filing: 28.07.2009
(51) Int. Cl.: B62D 33/06

(54) **Cabin for truck and method for realizing said cabin**
Führerhaus für Lastkraftwagen und Verfahren zur Herstellung des Führerhauses
Cabine pour camion et son procédé de réalisation

(43) Date of publication of application: 02.02.2011
(73) Proprietor: IVECO S.p.A., 10156 Torino (IT)
(72) Inventor: Stefano Zogno, 10015 Ivrea (IT)
(74) Representative: Borsano, Corrado

(56) References cited:
- EP-A1- 0 254 689
- WO-A1-97/10138
- DE-A1-102007 028 536
- DE-T5-112006 001 957
- US-A- 5 769 486
- US-A1- 2007 163 121

## Description

### FIELD OF THE INVENTION

The present invention belongs to the field of the truck production. More in particular, the invention relates to a cabin for a truck and a method for realizing said cabin.

### DESCRIPTION OF THE PRIOR ART

As it is known, most of the trucks (having medium or high carrying capacity) comprise a cabin which consists of a main body to which a roof is connected. An example of a known structure of a cabin of a truck is disclosed in US 5769486. The body is traditionally made of metallic material, while the roof, according to a first production process known in the art, is made of thermosetting plastic material and after that it is stuck to the body made of the previously painted metallic material. As an alternative, by means of a second production process known in the art, the roof is made of metallic material and then it is connected, by means of mechanical means to the main body. Once assembled, the main body and the roof (both made of metallic material) are simultaneously painted.

The new regulations, which define the structural resistance requirements of the cabins, also known as OICA regulations, have forced the cabin manufacturers to completely redesign the structure of the cabins. According to these regulations, the cabins have to pass a first series of crash tests aiming to check the resistance of the body of the cabin and a second series of crash tests aiming to check the resistance of the roof.

In order to pass these tests, the cabins need to be able to absorb an overall front impact energy of about 20% higher than the one required before the new regulations came into force. It is clear that this necessity has forced the cabin manufacturers to prefer the use of metallic material instead of thermosetting plastic material for the production of the cabin roof.

This industrial choice points out two big problems that have to be solved, the first of which relates to the present connection between the parts (roof and body) of the cabin. At present, this connection is made by means of mechanical connections which are substantially external to the structure of the cabin. These connections are quite critical from the point of view of the mechanical seal, and in many cases they require sealing elements, for example gaskets, to be interposed between the roof and the main body. In addition, the external position of the connection means needs coating means in order to cover the region connecting the roof and the main body.

A second problem is connected to the economic need to continue exploiting the plants used at present for assembling the cabins having the roof made of plastic material. The dimentions of these plants, in fact, do not allow to perform the second production process mentioned above, and in particular these do not include painting means having appropriate dimensions in order to allow the simultaneous painting of the body and of the roof, once they are connected.

According to these considerations, the need emerges for new solutions which allow to overcome the drawbacks mentioned above and which allow a rapid and efficient assembling of a cabin made of metallic material also in plants previously used for assembling the cabins having a plastic roof. Therefore, the main task of the present invention is to provide a cabin for a truck and a realization method of said cabin. In the scope of this task, an aim of the present invention is to provide a cabin comprising a main body and a roof made of metallic material which may be connected to each other before or after their painting. Another aim of the present invention is to provide a cabin having a main body and a roof which can be easily assembled to each other in a reliable way and with competitive costs.

### SUMMARY OF THE INVENTION

Therefore the present invention relates to a cabin for a truck comprising a main body made of metallic material defined by a perimetral support structure which develops between a lower base and an upper frame. The cabin also comprises a roof made of metallic material defined by a covering structure delimited by a perimetral edge. The cabin according to the invention is characterized in that the main body comprises a connecting surface of the main body which develops within the perimetral structure. The roof comprises a connecting surface which develops within the covering structure. The two connecting surfaces are connected to each other so that the roof is connected to the main body.

The use of the connecting surfaces mentioned above allows a easy and fast connection of the roof to the main body. This connection may be performed after the independent painting of the two parts. This possibility advantageously allows to continue exploiting the industrial plants previously used for the painting of only the main body of the cabin. Practically, the connecting surfaces make the cabin production process particularly flexible, according to the industrial possibilities.

The connecting surfaces of the two parts (roof and body) are connected to each other using connection means comprising a perimetral ring connected by welding to the connecting surface of the roof. Such connection means further comprise mechanical connection elements which connect the perimetral ring to the connecting surface of the main body in order to constitute a structural extension of said connecting surface of said roof. According to the invention said perimetral ring are placed so that one of its surfaces rests flat on one side of said connecting surface of said roof which faces said covering surface of said roof. Preferably the connection means further comprise an adhesive substance provided between the connecting surface of the main body and the perimetral ring.

### LIST OF THE FIGURES

Further characteristics and advantages will become more evident from the following detailed description of embodiments of a cabin for trucks according to the present invention, that is shown in a merely illustrative and not limitative form in the attached drawings wherein:
- figure 1 shows a prospective view of a cabin for truck according to the present invention;
- figure 2 shows a prospective view relating to the main body of a cabin according to the present invention;
- figure 3 shows a prospective view relating to the roof of a cabin according to the present invention;
- figure 4 shows a section view according to the A-A plane of figure 1;
- figure 5 shows a detailed view of the detail A shown in figure 4;
- figure 6 shows a further prospective view of a roof for the realization of a cabin according to the invention;
- figure 7 shows a view of the perimetral ring of a roof according to the invention;
- figure 8 shows a prospective view of the roof of figure 6 comprising the perimetral ring of figure 7;
- figure 9 shows a cross section view according to the B-B plane of figures
- figure 10 shows a detailed view of the detail B shown in figure 9;
- figure 11 shows a section view of a cabin according to the invention comprising the roof of figure 8;
- figure 12 shows a detailed view of the detail C shown in figure 11;

### DETAILED DESCRIPTION OF THE INVENTION

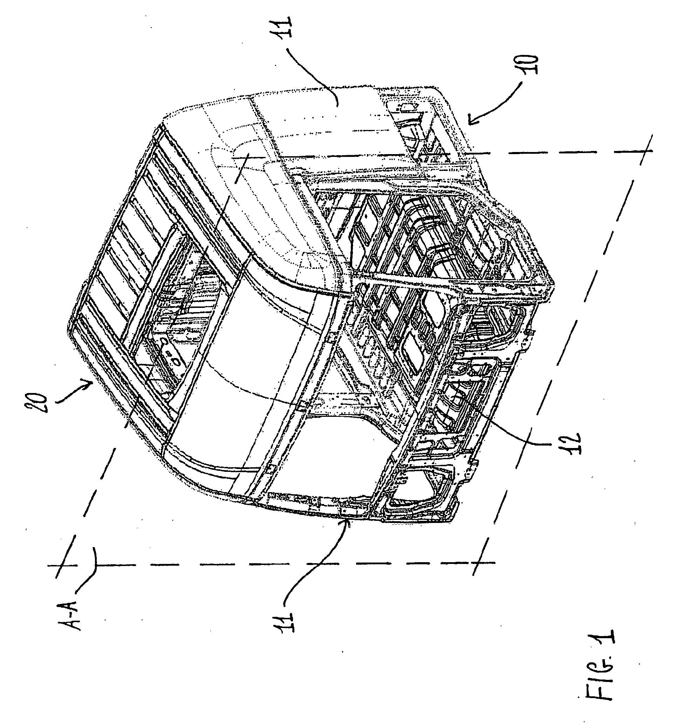

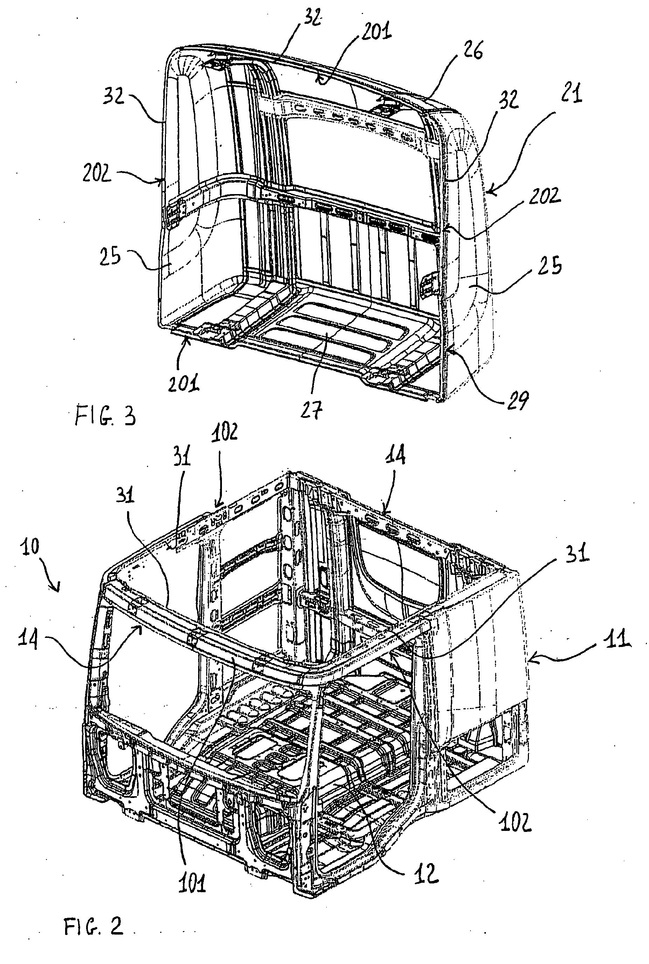

Figure 1 shows a cabin 1 for a truck according to the invention. The cabin 1 comprises a main body 10 and a roof 20 intended to be connected to the upper part of the main body 10. More precisely (see fig. 2) the main body 10, made of metallic material, has a perimetral support structure 11 which develops between a lower base 12 and an upper frame 14.

With reference to figure 2, the main body 10 comprises a connecting surface 31 of the main body 10 which develops within the perimetral support structure 11. The connecting surface 31 of the main body 10 is preferably defined by a perimetral portion of the frame 14. In the solution shown in figure 2, for example, the connecting surface 31 extends along a front side 101 of the frame, partially along two opposite sides 102 which develop from the front side 101 and preferably also on the rear side opposite to the front side 101. As better specified later, the connecting surface 31 of the main body 10 is intended to be connected to a connecting surface 32 of the roof 20 in order to perform the assembling of the cabin 20.

With reference to figure 3, the roof 20 is made of metallic material and comprises a covering structure 21 delimited by a perimetral edge 29. In the case of the roof shown in figure 3, the covering structure 21 has a substantially convex shape defined by a pair of lateral opposite surfaces 25, by a rear surface 27 and by an upper surface 26 which develops between the other surfaces mentioned above. The perimetral edge 29 of the roof 20 has four sides 201, 202 opposite in pairs.

Also according to figure 3, the roof 20 comprises a connecting surface 32 which connectable to the connecting surface 31 of the main body 10. According to a preferred embodiment of the invention, the connecting surface 32 of the roof 20 is defined by a portion of the perimetral edge 29 of the roof 20. In the roof shown in figure 3, such portion extends along a front side 201 and partially along two opposite sides 202 which develop from the front side 201.

The embodiments described so far are preferred, but non exclusive embodiments of the main body 10 and of the roof 20 of the cabin according to the present invention. Therefore alternative embodiments, but functionally equivalent to the ones described so far, have to be considered as not departing from the scope of the invention.

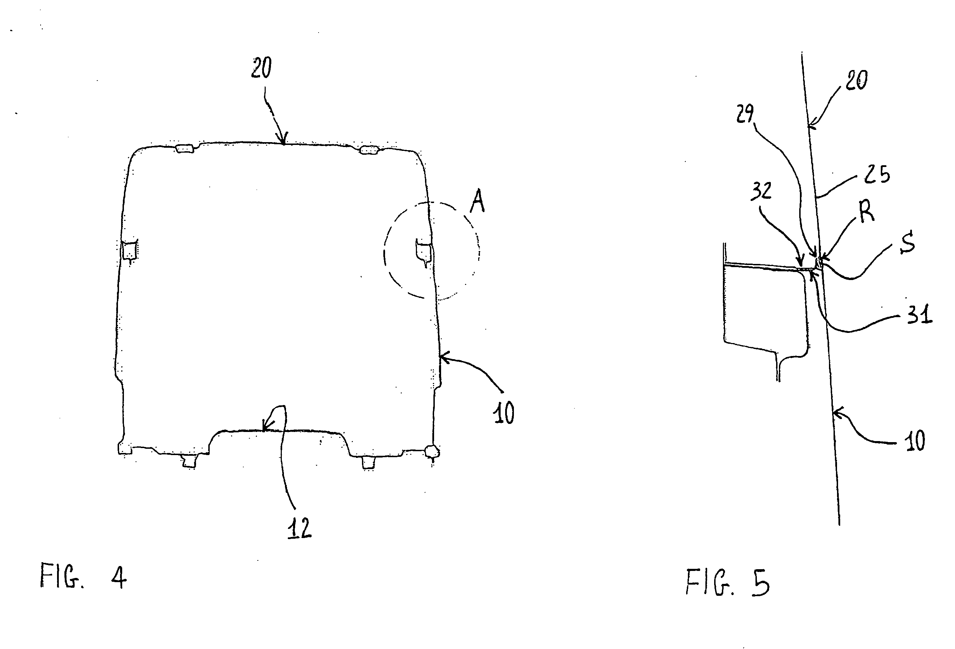

Figure 4 shows a cross section of the cabin 1 according to the invention shown in figure 1. Figure 5, instead, shows a first possible connection between the two surfaces 31, 32. With reference to figure 5, it is possible to observe that the two connecting surfaces 31, 32 are preferably flat, in order to advantageously facilitate the positioning of the roof 20 with respect to the main body 10.

The solution shown in figure 5 is also relative to a first possible assembling of a cabin 1 comprising a main body 10 and a roof 20 according to the present invention. In particular, according to this assembling, the two surfaces 31, 32 are connected by means of a laser braze welding. This method is particularly suitable for connecting the roof 20 to the main body 10 before painting both elements. In other words, after the laser braze welding, the cabin 1 may advantageously be painted in a integral way in a plant having appropriate dimensions.

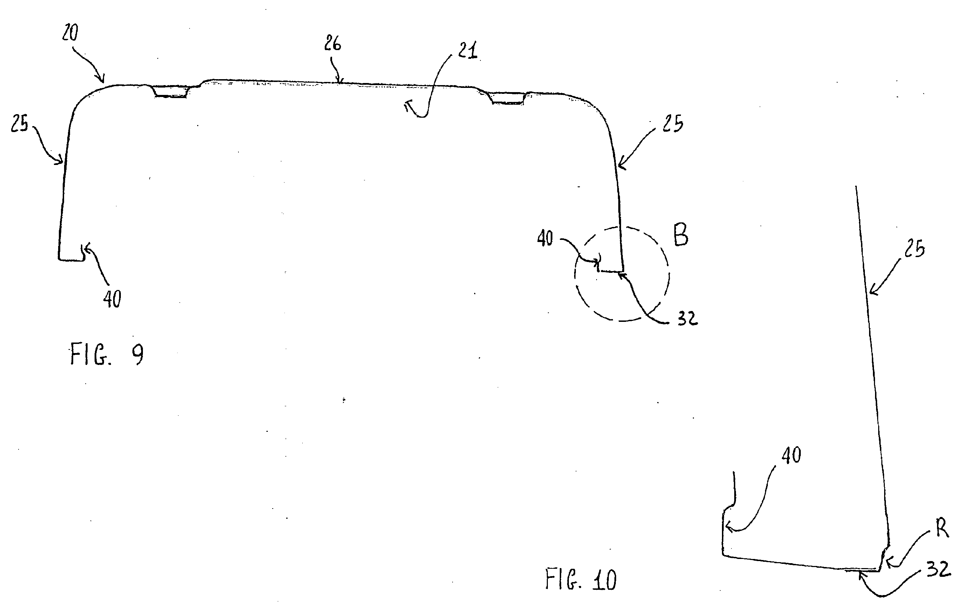

As it is possible to see in figure 5, the laser braze welding needs that the two connecting surfaces 31, 32 are in contact between each other. On this point, it is possible to observe that the perimetral edge 29 of the roof 20 is defined in a sunken position with respect to the lateral surfaces 25 of the covering structure 21, in order to define a perimetral recess R (see also figure 10) suitable to provide a housing for the weld material used in the braze welding.

The use of the laser allows to locally melt the weld material which firmly welds between the two surfaces 31,32, connecting them to each other. This condition is particularly advantageous in terms of mechanical seal. Moreover the use of the laser, allows to obtain a seam welding, completely contained within the recess R of the covering structure 21. Thus no additional covering elements or seal elements are necessary.

However the embodiment shown in the Figures 4 and 5 and above disclosed is not part of the claimed subject matter.

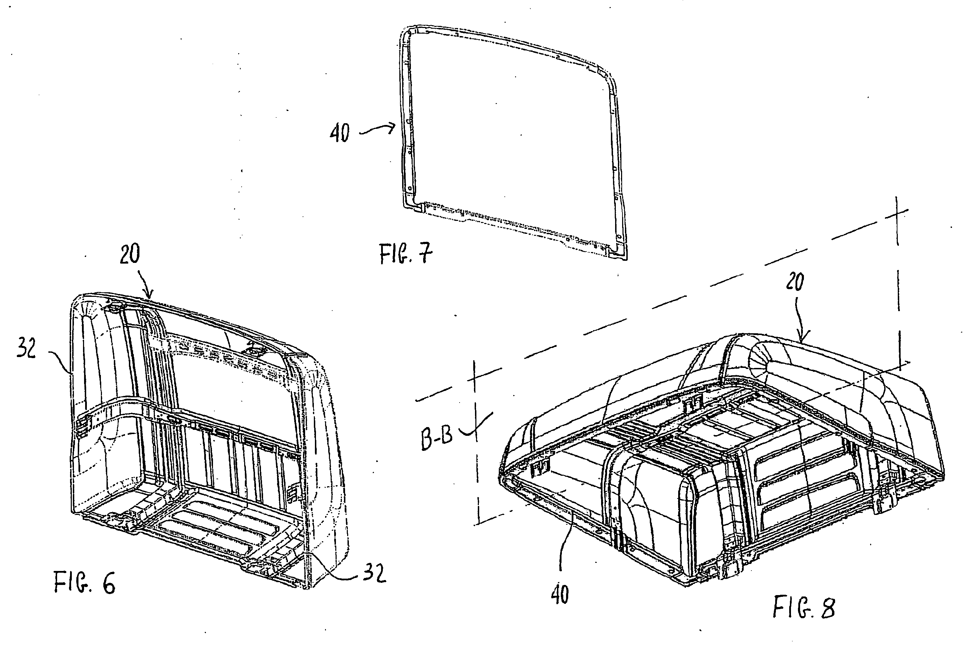

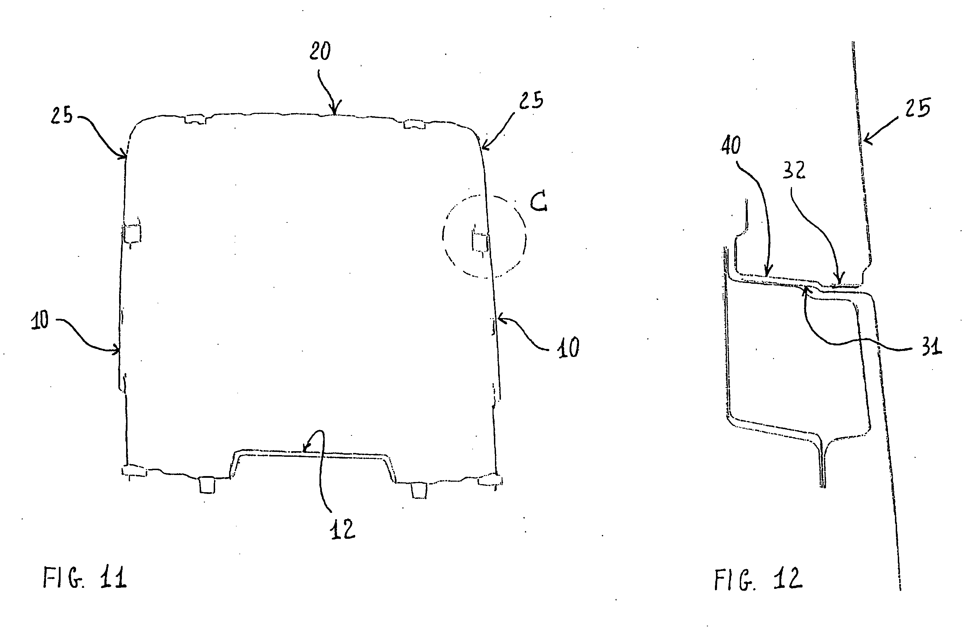

Figures 6 and 12 are relative to a second possible connection of the two surfaces 31 and 32 which advantageously allows to assemble the cabin 1 after the independent painting of the roof 20 and of the main body 10. In particular this assembling mode may advantageously be performed in the plants traditionally used for realizing the cabins with plastic roofs. The roof 20 and the body 10 may , for example, advantageously be painted by means of the same painting means with obvious economic advantages.

According to this second connection mode, the two surfaces 31,32 are connected using connection means comprising a perimetral ring 40 which is welded to the connecting surface 32 of the roof. By this way, the surface used for the connection between the roof 20 and the main body 10 is increased. On this point, the figure 6 shows the roof 20 before the welding of the perimetral ring 40, while the figure 8 shows the same roof 20 after the realization of the welding itself.

Figures 9 and 10 are section views of the roof 20 and allow to observe in detail the welding between the perimetral ring 40 and the connecting surface 32 of the roof 20. The ring 40 is placed so that one of its surfaces rests on one side of the connecting surface 32 which faces the covering structure 21 of the roof 20. Thus, when the welding is completed, the perimetral ring 40 constitutes a structural extension of the connecting surface 32 of the roof 20.

With reference to the section views 11 and 12, the connection means further comprise connection elements (not shown) which exert a closing action which firmly connects the ring 40 to the first connecting surface 31. These mechanical connection elements may be, for example, nuts or other functionally equivalent means and are placed operatively inside the cabin 1.

According to a preferred embodiment, the connection means may also comprise an adhesive substance that is provided between the ring 40 and the first connecting surface 31, so that the connection takes place also because of gluing. In other words, the use of mechanical connection elements ensures the connection between the ring 40 and the first connecting surface 31, while the use of an adhesive substance advantageously allows to limit the number of mechanical connection elements employed. Practically, the combined use of mechanical connection elements and of adhesive substance ensures a reliable and not expensive connection.

The present invention relates also to a realization method of a cabin for a truck comprising a main body and a roof according to what mentioned abode. In the method according to the invention, on said main body 10, it is provided a first connecting surface 31 which develops within the perimetral structure of the body itself, and on the roof 20 it is provided a second connecting surface which develops within the covering structure 21 of the roof itself. Moreover, according to the method, such connecting surfaces are connected to each other, in order to assemble the cabin 1. In a first possible embodiment, such connection is performed preferably by means of laser braze welding, before painting the roof 20 and the main body 10. In a second possible embodiment, alternative to the previous one, the connection between the two surfaces 31,32 is performed after painting the two parts (roof and body) of the cabin 1. In this second case, the two surfaces 31,32 are connected to each other by means of connection means comprising a perimetral ring 40 which is welded to the connecting surface of the roof 20. Such connection means further comprise connection elements which exert a force of pressure between said perimetral ring 40 and said connecting surface 31 of the main body 10. The connection means further comprise an adhesive substance provided between the perimetral ring and the connecting surface 31 of the main body 10.

The technical solutions adopted for the cabin allow to completely fulfil the task and the purposes set in advance. In particular the roof and the main body of the cabin may advantageously be assembled according to different assembling modes, by virtue of the presence of the respective connecting surfaces. This possibility is particularly advantageous from an industrial point of view, since it allows to continue exploiting the existing plants. At the same time, the presence of the connecting surfaces makes the connection between the roof and the main body particularly fast and precise, reducing production time and costs.

The cabin and the method according to the invention, can be subjected to numerous variations or modification, without departing from the scope of the invention; moreover all the details may be replaced by other technically equivalent.

Practically, the material used and also the dimensions and the shapes may be any, according to the needs and to the state of the art.

## Claims

1. Cabin (1) for a trucks comprising:
- a main body (10) made of Metallic material comprising a perimetral support structure (11) which develops between a lower base (12) and an upper frame (14);
- a roof (20) made of metallic material comprising a covering structure (21) and a perimetral edge (29); and wherein said main body (10) comprises a connecting surface (31) of said main body (10) which develops within said perimetral support structure (11), said roof (20) comprising a connecting surface (32) of said roof (20) which develops inward of said covering structure (21), said connecting surface (31) of said main body (10) being connected to said connecting surface (32) of said roof (20); **characterized in that** said connecting surfaces (31, 32) are connected to each other by means of connection means comprising a perimetral ring (40) connected by welding to said connecting surface (32) of said roof (20), in order to constitute a structural extension of said connecting surface (32), said connection means comprising connection elements functionally placed within said cabin (1), said perimetral ring (40) being placed so that one of its surfaces rests flat on one side of said connecting surface (32) of said roof (20) which faces said covering structure (21) of said roof.

2. Cabin (1) according to claim 1, wherein said connecting surfaces are a substantially flat.

3. Cabin (1) according to claim 1 or 2, wherein said connection means also comprise an adhesive substance provided between said perimetral ring (40) and said connecting surface (31) of said main body (10).

4. Method for realizing a cabin of a truck, said cabin comprising:
- a main body (10) made of metallic material comprising a perimetral support structure (11) which develops between a lower base (12) and an upper frame (14);
- a root (20) made of metallic material comprising a covering structure (21) and a perimetral edge (29), said method comprising the steps of:
- providing, on said main body (10), a connecting surface (31) of the main body (10) which develops within said perimetral support structure (11);
- providing on said roof (20), a connecting surface (32) of said roof (20) which develops within said covering structure (21);
- connecting, the connecting surface (32) of said roof (20) to the connecting surface (31) of said main body, by means of connection means comprising a perimetral ring (40) connected by welding to said connecting surface (32) of said roof (20), in order to constitute a structural extension of said connecting surface (32), and mechanical connection elements functionally placed within said cabin (1), said perimetral ring (40) being placed so that one of its surfaces rests flat on one side of said connecting surface (32) of said roof (20) which faces said covering structure (21) of said roof.

5. Method according to claim 4, wherein said connection means also comprise an adhesive substance provided between said perimetral ring (40) and said connecting surface of said main body (10).

## Patentansprüche

1. Führerhaus (1) für einen Lastkraftwagen, aufweisend:
- einen Hauptkörper (10) aus metallischem Material aufweisend eine umlaufende Trägerstruktur (11), die sich zwischen einem unteren Boden (12) und einem oberen Rahmen (14) ausbildet;
- ein Dach (20) aus metallischem Material aufweisend eine Abdeckstruktur (21) und einen umlaufenden Rand (29);
und wobei der Hauptkörper (10) eine Verbindungsfläche (31) des Hauptkörpers (10) aufweist, die sich innerhalb der umlaufenden Trägerstruktur (11) ausbildet, wobei das Dach (20) eine Verbindungsfläche (32) des Dachs (20) aufweist, die sich einwärts von der Abdeckstruktur (21) ausbildet, wobei die Verbindungsfläche (31) des Hauptkörpers (10) mit der Verbindungsfläche (32) des Dachs (20) verbunden ist; **dadurch gekennzeichnet, dass**
die Verbindungsflächen (31, 32) miteinander durch Verbindungsmittel verbunden sind, die einen umlaufenden Ring (40) aufweisen, der durch Schweißen mit der Verbindungsfläche (32) des Dachs (20) verbunden ist, um eine strukturelle Erweiterung der Verbindungsfläche (32) zu bilden, wobei die Verbindungsmittel Verbindungselemente aufweisen, die innerhalb des Führerhauses (1) funktional angeordnet sind, wobei der umlaufende Ring (40) angeordnet ist, so dass eine seiner Oberflächen flach auf einer Seite der Verbindungsfläche (32) des Dachs (20) liegt, die der Abdeckstruktur (21) des Dachs gegenüberliegt.

2. Führerhaus (1) nach Anspruch 1, wobei die Verbindungsflächen im Wesentlichen flach sind.

3. Führerhaus (1) nach Anspruch 1 oder 2, wobei die Verbindungsmittel auch einen Klebstoff aufweisen, der zwischen dem umlaufenden Ring (40) und der Verbindungsfläche (31) des Hauptkörpers (10) vorgesehen ist.

4. Verfahren zur Realisierung eines Führerhauses von einem Lastkraftwagen, wobei das Führerhaus aufweist:
- einen Hauptkörper (10) aus metallischem Material aufweisend eine umlaufende Trägerstruktur (11), die sich zwischen einem unteren Boden (12) und einem oberen Rahmen (14) ausbildet;
- ein Dach (20) aus metallischem Material aufweisend eine Abdeckstruktur (21) und einen umlaufenden Rand (29),
wobei das Verfahren die Schritte aufweist:
- Bereitstellen, an dem Hauptkörper (10), eine Verbindungsfläche (31) des Hauptkörpers (10), die sich innerhalb der umlaufenden Trägerstruktur (11) ausbildet;
- Bereitstellen, an dem Dach (20), eine Verbindungsfläche (32) des Dachs (20), die sich innerhalb der Abdeckstruktur (21) ausbildet;
- Verbinden der Verbindungsfläche (32) des Dachs (20) mit der Verbindungsfläche (31) des Hauptkörpers durch Verbindungsmittel, aufweisend einen umlaufenden Ring (40), der durch Schweißen mit der Verbindungsfläche (32) des Dachs (20) verbunden ist, um eine strukturelle Erweiterung der Verbindungsfläche (32) zu bilden, und mechanische Verbindungselemente, die innerhalb des Führerhauses (1) funktional angeordnet sind, wobei der umlaufende Ring (40) angeordnet ist, so dass eine seiner Oberflächen flach auf einer Seite der Verbindungsfläche (32) des Dachs (20) liegt, die der Abdeckstruktur (21) des Dachs gegenüberliegt.

5. Verfahren nach Anspruch 4, wobei die Verbindungsmittel auch einen Klebstoff aufweisen, der zwischen dem umlaufenden Ring (40) und der Verbindungsfläche des Hauptkörpers (10) vorgesehen ist.

## Revendications

1. Cabine (1) pour un camion, comprenant :
- un corps principal (10) constitué d'un matériau métallique comprenant une structure de support périmétrique (11) qui se développe entre une base inférieure (12) et un cadre supérieur (14) ;
- un toit (20) constitué d'un matériau métallique comprenant une structure de recouvrement (21) et un bord périmétrique (29) ; et dans laquelle
ledit corps principal (10) comprend une surface de liaison (31) dudit corps principal (10) qui se développe à l'intérieur de ladite structure de support périmétrique (11), ledit toit (20) comprenant une surface de liaison (32) dudit toit (20) qui se développe vers l'intérieur de ladite structure de recouvrement (21), ladite surface de liaison (31) dudit corps principal (10) étant reliée à ladite surface de liaison (32) dudit toit (20) ; **caractérisée en ce que** lesdites surfaces de liaison (31, 32) sont reliées l'une à l'autre par le biais de moyens de liaison comprenant un anneau périmétrique (40) relié par soudage à ladite surface de liaison (32) dudit toit (20), afin de constituer une extension structurelle de ladite surface de liaison (32), lesdits moyens de liaison comprenant des éléments de liaison placés fonctionnellement à l'intérieur de ladite cabine (1), ledit anneau périmétrique (40) étant placé de sorte que l'une de ses surfaces repose à plat sur un côté de ladite surface de liaison (32) dudit toit (20) faisant face à ladite structure de recouvrement (21) dudit toit.

2. Cabine (1) selon la revendication 1, dans laquelle lesdites surfaces de liaison sont sensiblement plates.

3. Cabine (1) selon la revendication 1 ou 2, dans laquelle lesdits moyens de liaison comprennent également une substance adhésive fournie entre ledit anneau périmétrique (40) et ladite surface de liaison (31) dudit corps principal (10).

4. Procédé de réalisation d'une cabine d'un camion, ladite cabine comprenant :
- un corps principal (10) constitué d'un matériau métallique comprenant une structure de support périmétrique (11) qui se développe entre une base inférieure (12) et un cadre supérieur (14) ;
- un toit (20) constitué d'un matériau métallique comprenant une structure de recouvrement (21) et un bord périmétrique (29),
ledit procédé comprenant les étapes de :
- la fourniture, sur ledit corps principal (10), d'une surface de liaison (31) du corps principal (10) qui se développe à l'intérieur de ladite structure de support périmétrique (11) ;
- la fourniture, sur ledit toit (20), d'une surface de liaison (32) dudit toit (20) qui se développe à l'intérieur de ladite structure de recouvrement (21) ;
- la liaison de ladite surface de liaison (32) dudit toit (20) à la surface de liaison (31) dudit corps principal par le biais de moyens de liaison comprenant un anneau périmétrique (40) relié par soudage à ladite surface de liaison (32) dudit toit (20), afin de constituer une extension structurelle de ladite surface de liaison (32), et des éléments de liaison mécaniques placés fonctionnellement à l'intérieur de ladite cabine (1), ledit anneau périmétrique (40) étant placé de sorte que l'une de ses surfaces repose à plat sur un côté de ladite surface de liaison (32) dudit toit (20) faisant face à ladite structure de recouvrement (21) dudit toit.

5. Procédé selon la revendication 4, dans lequel lesdits moyens de liaison comprennent également une substance adhésive fournie entre ledit anneau périmétrique (40) et ladite surface de liaison dudit corps principal (10).
